# FASCICULE DE BREVET EUROPEEN

(11) **EP 1 977 140 B1**
(45) Date de publication et mention de la délivrance du brevet: **08.06.2011**
(21) Numéro de dépôt: 07731515.8
(22) Date de dépôt: 24.01.2007
(51) Int. Cl.: F16H 37/04, F16H 3/12, F16H 3/093

(54) **GROUPE MOTOPROPULSEUR A MOTEUR AUXILIAIRE RACCORDE SUR UN ARBRE INTERMEDIAIRE DE LA BOITE DE VITESSES**
ANTRIEBSSTRANG MIT AN EINER AUSGLEICHSWELLE DES GETRIEBES ANGESCHLOSSENEM HILFSMOTOR
DRIVE TRAIN COMPRISING AN AUXILIARY ENGINE WHICH IS CONNECTED TO A COUNTERSHAFT OF THE TRANSMISSION

(30) Priorité: 25.01.2006 FR 0600678
(43) Date de publication de la demande: 08.10.2008
(73) Titulaire: Renault SAS, 92100 Boulogne Billancourt (FR)
(72) Inventeur: RAOUL, Michel, F-78990 Elancourt (FR)
(86) Numéro de dépôt international: PCT/FR2007/050687
(87) Numéro de publication internationale: WO 2007/085765

(56) Documents cités:
- EP-A- 0 845 618
- EP-A- 1 199 468
- FR-A- 2 822 758
- FR-A- 2 869 571

## Description

L'invention concerne le domaine des groupes motopropulseur pour véhicules automobiles, et en particulier le domaine des groupes motopropulseur ayant un moteur principal, un moteur auxiliaire et une boîte de vitesses à arbres parallèles.

Dans ce domaine, la demande de brevet WO 2005/065 976 (EATON CORPORATION) a décrit une boîte de vitesses comprenant un arbre primaire plein et un arbre primaire creux coaxiaux reliés à un premier moteur par un embrayage double. L'arbre primaire creux comprend des cannelures entraînées en rotation par un rotor d'un deuxième moteur. Les rapports de la boîte de vitesses sont établis grâce à des synchroniseurs à crabot. Les séquences de transition d'un rapport de la boîte de vitesses à un rapport adjacent, comprennent deux étapes. Une première étape où le synchroniseur à crabot du rapport adjacent est enclenchée, puis une deuxième étape où le couple moteur bascule d'un arbre primaire sur l'autre arbre primaire. Ce qui permet d'avoir une transition sous couple. Dans une telle boîte de vitesses, l'encombrement du deuxième moteur s'ajoute à la longueur de la boîte de vitesses. Les rapports de marche arrière, de deuxième et de quatrième sont activés par l'arbre primaire plein. Lorsque l'un de ces rapports est actif, un embrayage supplémentaire permet de relier le deuxième moteur au premier moteur. L'embrayage supplémentaire présente un encombrement qui s'ajoute encore à la longueur de la boîte de vitesses. EP845 618 montre les caractéristiques du préambule de la revendication 1.

L'invention propose un groupe motopropulseur ayant un moteur principal et un moteur auxiliaire qui remédie au inconvénients précédents et notamment dont le moteur auxiliaire peut être relié, soit au moteur principal, soit aux roues du véhicule, soit aux deux simultanément, et ce pour tous les rapports de la boîte de vitesses, et ceci sans nécessiter d'embrayage supplémentaire.

Le groupe motopropulseur pour véhicule automobile, est équipé d'un moteur principal, d'un moteur auxiliaire et d'une boîte de vitesses à arbres parallèles. La boîte de vitesses comprend au moins un arbre primaire relié au moteur principal par un dispositif d'embrayage, au moins un arbre secondaire muni d'un pignon d'attaque engrenant avec une couronne de différentiel, un arbre intermédiaire non coaxial avec les arbres primaire et secondaire, et une pluralité de synchroniseurs aptes à solidariser de manière sélective en rotation un arbre primaire avec un arbre secondaire. L'arbre intermédiaire est muni d'une roue d'entraînement, reliée au moteur auxiliaire, et liée en rotation de manière permanente avec le ou les arbres primaires.

Si il y a un seul arbre primaire, la roue d'entraînement est liée à cet arbre primaire. Si il y a plusieurs arbres primaires reliés au moteur principal par un dispositif d'embrayage, la roue d'entraînement est liée en rotation à chacun des arbres primaires.

On conçoit que dans un tel groupe motopropulseur, le moteur auxiliaire peut être relié au moteur principal, et pas aux roues du véhicule, lorsque aucun synchroniseur n'établit de lien entre l'un des arbres primaires et l'un des arbres secondaires, et que le dispositif d'embrayage établit le lien entre le moteur principal et l'un des arbres primaires. Le moteur auxiliaire peut également entraîner les roues du véhicule selon la totalité des rapports de la boîte de vitesses, sans être relié au moteur principal. Pour cela, aucun embrayage n'établit de lien entre le moteur principal et l'un des arbres primaires, et au moins un des synchroniseurs établit un lien entre l'un des arbres primaires et l'un des arbres secondaires. Le moteur auxiliaire peut également entraîner les roues du véhicule selon la totalité des rapports de la boîte de vitesses, tout en étant également relié au moteur principal. Dans ce groupe motopropulseur, il n'est pas nécessaire d'actionner un embrayage supplémentaire à celui ou à ceux entraînant le ou les arbres primaires.

Selon une variante, le groupe motopropulseur comprend une boîte de vitesses robotisée, munie d'au moins un actionneur motorisé de commande de synchroniseurs et/ou du dispositif d'embrayage.

Avantageusement, la boîte de vitesses comprend un arbre primaire principal et un arbre primaire auxiliaire reliés chacun de manière sélective au moteur principal par le dispositif d'embrayage, la roue d'entraînement étant montée fixe sur l'arbre intermédiaire, lequel arbre intermédiaire est muni d'un couple de pignons fixes de démultiplication, engrenant l'un avec un pignon fixe de l'arbre primaire principal, l'autre avec un pignon fixe de l'arbre primaire auxiliaire.

Avantageusement, le dispositif d'embrayage présente une position enclenchée principale où l'arbre primaire principal est synchronisé avec le moteur principal, une position neutre où aucun arbre primaire n'est relié au moteur principal, et une position enclenchée auxiliaire où l'arbre primaire auxiliaire est synchronisé avec le moteur principal.

Avantageusement, l'arbre intermédiaire est muni d'un pignon intermédiaire de marche arrière, engrenant avec un pignon de marche arrière monté sur l'arbre secondaire, un synchroniseur de marche arrière étant monté soit sur l'arbre intermédiaire, soit sur l'arbre secondaire. La vitesse de rotation de la roue d'entraînement peut être supérieure à la vitesse de rotation du pignon intermédiaire de marche arrière.

Avantageusement, le groupe motopropulseur comprend des moyens de fixation du moteur auxiliaire. La roue d'entraînement et un rotor du moteur auxiliaire sont reliés par une chaîne. La vitesse de rotation d'un rotor du moteur auxiliaire peut être supérieure à la vitesse de rotation du ou des arbres primaires.

Avantageusement, le moteur principal est un moteur thermique et le moteur auxiliaire est un générateur apte à transformer de l'énergie mécanique en une autre énergie, notamment électrique.

Selon une variante, la boîte de vitesses comprend un synchroniseur double à crabot, monté sur un des arbres secondaires, contribuant aux rapports de marche arrière et au rapport de première vitesse, une roue libre étant intercalée entre un baladeur dudit synchroniseur et un pignon fou de première, le pignon de première étant le pignon de l'arbre secondaire situé le plus proche du pignon d'attaque.

Selon une autre variante, la boîte de vitesses comprend un synchroniseur double et un synchroniseur simple de type à cônes de friction montés sur l'un des arbres primaires, ledit synchroniseur double à friction contribuant à au moins trois rapports de marche avant.

Selon un mode particulier de réalisation de l'invention, la boîte de vitesses présente cinq rapports de marche avant. Le synchroniseur double à friction et le synchroniseur double à crabot sont actionnés par un premier actionneur motorisé selon deux positions de sélection différentes. Le synchroniseur simple à friction solidarise un pignon de seconde situé du même coté dudit synchroniseur simple que le dispositif d'embrayage, ledit synchroniseur simple et le dispositif d'embrayage étant actionnés par un deuxième actionneur motorisé.

Selon un mode particulier de réalisation de l'invention, la boîte de vitesses présente six rapports de marche avant. Le synchroniseur double à friction et le synchroniseur double à crabot sont actionnés par un premier actionneur motorisé selon deux positions de sélection différentes. Le synchroniseur simple à friction solidarise un pignon de seconde situé du coté opposé dudit synchroniseur simple par rapport au dispositif d'embrayage, ledit synchroniseur simple et le dispositif d'embrayage étant actionnés par un deuxième actionneur motorisé selon une même position de sélection.

D'autres caractéristiques et avantages de l'invention apparaîtront à la lecture de la description détaillée de quelques modes de réalisation pris à titre d'exemples non limitatifs et illustrés par les dessins annexés, selon lesquels :
- la figure 1 est une coupe longitudinale selon le plan I-I de la figure 2, d'un premier mode de réalisation de boîte de vitesses robotisée hybride à six vitesses ;
- la figure 2 est une coupe transversale partielle de la boîte de vitesses robotisée hybride à six vitesses montrant le système de commande des fourchettes; et
- la figure 3 est une coupe longitudinale d'un deuxième mode de réalisation d'une boîte de vitesses robotisée hybride à cinq vitesses ;

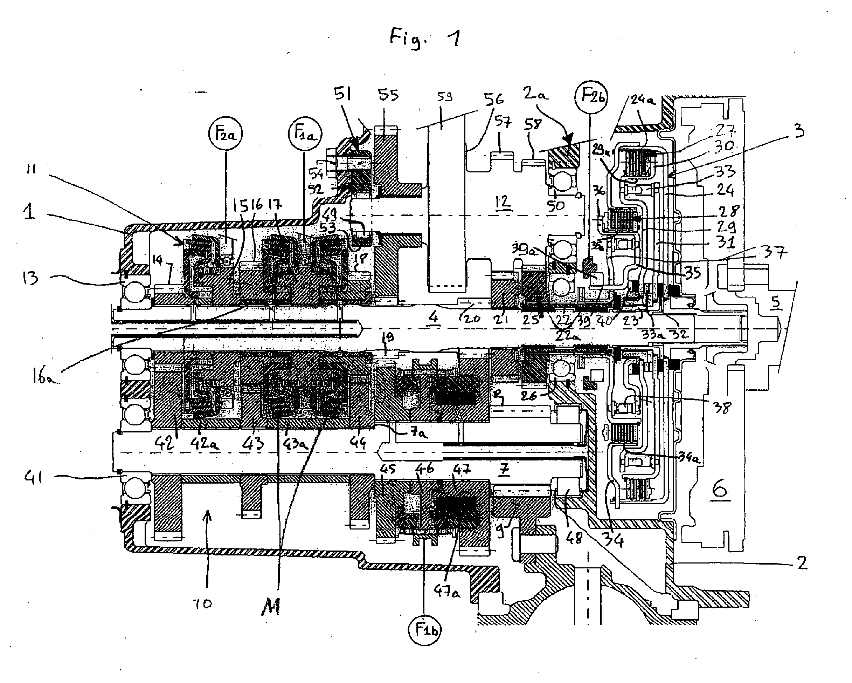

Comme illustré sur la figure 1, un mode de réalisation d'un groupe motopropulseur de véhicule, comprend une boîte de vitesses munie d'un carter principal 1 et d'un carter d'embrayage 2. Un dispositif d'embrayage 3 relie un arbre primaire principal 4 à un vilebrequin 5 d'un moteur thermique, non représenté, via un volant amortisseur 6, représenté en silhouette sur la figure 1. Un arbre secondaire 7 est muni d'un pignon d'attaque 8 engrenant avec une couronne de différentiel 9 et est ainsi relié aux roues du véhicule de manière permanente.

L'arbre primaire principal 4 s'étend sur toute la longueur de la boîte de vitesses, depuis un côté de la boîte de vitesses contenant le dispositif d'embrayage 3 jusqu'à une zone de fond 10 contenant une pluralité de synchroniseurs 11. La boîte de vitesses comprend également un arbre intermédiaire 12, parallèle et non coaxial avec l'arbre primaire principal 4 et avec l'arbre secondaire 7.

L'arbre primaire principal 4 comprend successivement, de gauche à droite sur la figure 1, un palier à billes 13, un pignon fou 14 pour le second rapport de vitesse qui sera appelé par simplification « pignon de seconde » 14, un corps de synchroniseur simple 15 monté sur cannelures, un pignon fou 16 pour les quatrième et sixième rapports de vitesse qui sera appelé par simplification « pignon de quatrième et de sixième » 16, monté sur une bague 16a, un corps de synchroniseur double 17 monté sur cannelures, un pignon fou 18 pour les rapports de troisième ou de cinquième vitesse, qui sera appelé par simplification « pignon de troisième et de cinquième » monté sur une bague, une denture de marche arrière 19, une denture de première vitesse 20, un premier pignon de démultiplication 21 monté sur cannelures, un arbre primaire auxiliaire 22 en forme de manchon monté sur deux paliers à aiguilles 22a, un manchon 23 monté sur cannelures, et une cloche extérieure 24 enveloppant le dispositif d'embrayage 3 montée libre en rotation.

L'arbre primaire auxiliaire 22 reçoit successivement de gauche à droite sur la figure 1, un deuxième pignon de démultiplication 25 rendu solidaire par des cannelures du manchon 22, un palier à billes 26 et des cannelures d'entraînement du dispositif d'embrayage 3. L'arbre primaire auxiliaire 22 est coaxial à l'arbre primaire principal 4 par rapport auquel il peut tourner sur les paliers 22a.

Le dispositif d'embrayage 3 comprend un ensemble multidisques principal 27 reliant la cloche extérieure 24 avec l'arbre primaire principal 4 et un ensemble multidisques auxiliaire 28 entraînant l'arbre primaire auxiliaire 22. Les deux ensembles multidisques 27 et 28 sont coaxiaux. L'ensemble multidisques auxiliaire 28 est légèrement décalé axialement par rapport à l'ensemble multidisques principal 27, du côté de l'arbre primaire auxiliaire 22.

L'ensemble multidisques principal 27 comprend une pluralité de disques extérieurs liés en rotation avec la cloche extérieure 24 grâce à des crans coopérant avec une rainure ménagée dans une jupe 24a de la cloche extérieure 24. L'ensemble multidisques principal 27 comprend également une pluralité de disques intérieurs, intercalés avec la pluralité de disques extérieurs et solidaires en rotation d'un piston principal 29 grâce à des crans de chacun des disques de la pluralité de disques intérieurs coopérant avec des rainures. Les deux pluralités de disques de l'ensemble de disques principal 27 sont mobiles en translation entre la jupe 24a de la cloche extérieure 24 et une partie cylindrique correspondante 29a du piston principal 29. La cloche extérieure 24 comprend une butée axiale non représentée, empêchant la pluralité de disques extérieurs de se déplacer du côté gauche de la figure 1. Le piston principal 29 comprend une butée axiale 30 située à la droite de l'ensemble multidisques principal 27 apte à comprimer l'ensemble multidisques principal 27 contre la butée axiale de la cloche extérieure 24.

Le piston principal 29, mobile axialement, est lié en rotation avec une cloche intérieure principale 31, solidaire du manchon 23 et entraînant l'arbre primaire principal 4. Une butée à aiguilles 32 est disposée axialement entre la cloche extérieure 24 et la cloche intérieure principale 31. Un dispositif d'assistance principal 33 est disposé axialement entre la cloche intérieure principale 31 et le piston principal 29.

L'ensemble multidisques auxiliaire 28 est composé d'une pluralité de disques extérieurs et d'une pluralité de disques intérieurs, intercalés entre eux. Les disques extérieurs sont solidaires d'une cloche extérieure auxiliaire 34 contournant le dispositif d'assistance 33 et l'ensemble multidisques principal 27. La cloche auxiliaire 34 est rigidement fixée à la cloche extérieure principale 24. Les disques intérieurs sont liés en rotation à un piston auxiliaire 35. Les deux pluralités de disques auxiliaires sont mobiles en translation le long de l'axe du dispositif d'embrayage 3 grâce à des rainures ménagées dans des parties de jupe 34a de la cloche extérieure auxiliaire 34 et 35a du piston auxiliaire 35.

La cloche extérieure auxiliaire 34 comprend une butée axiale, non représentée, située à la droite de l'ensemble multidisques auxiliaire 28. Le piston auxiliaire 35 comprend une butée axiale 36 permettant de comprimer l'ensemble multidisques auxiliaire 28 vers la butée de la cloche auxiliaire 34. Le piston auxiliaire 35 est lié en rotation avec une cloche intérieure auxiliaire 37 grâce à des dispositifs d'assistance auxiliaires 38. Une butée axiale à aiguilles 40 est disposée axialement entre le piston principal 29 et le piston auxiliaire 35. Le piston auxiliaire 35 présente des doigts de commande 39 s'étendant axialement et traversant la cloche intérieure auxiliaire 37. Les doigts de commande 39 peuvent être actionnés par une fourchette de commande F2b du dispositif d'embrayage 3 par l'intermédiaire d'un palier à billes 39a. La cloche intérieure auxiliaire 37 entraîne l'arbre primaire auxiliaire 22 grâce à des cannelures.

On va décrire maintenant le fonctionnement du dispositif d'embrayage 3. L'ensemble comprenant la fourchette de commande d'embrayage F2b, le piston auxiliaire 35, et le piston principal 29, forment un ensemble mobile axialement et comprimé par le dispositif de mise en pression 33a.

Lorsque la fourchette de commande d'embrayage F2b n'est pas actionnée, le dispositif de mise en pression 33a maintient en position extrême vers la gauche de la figure 1, les pistons principal 29 et auxiliaire 35. L'ensemble multidisques principal 27 est à l'état comprimé et l'ensemble multidisques auxiliaire 28 est à l'état non comprimé. Cette position constitue une position d'enclenchement principal du dispositif d'embrayage 3. Dans cette position, le moteur est relié à l'arbre primaire principal 4. Dans cette position, l'adhérence a lieu entre la cloche extérieure principale 24 et la cloche intérieure principale 31 qui entraîne l'arbre primaire principal 4.

Lorsque la fourchette de commande d'embrayage F2b est déplacée vers la droite de la figure 1, l'ensemble des deux pistons 29 et 35 comprime le dispositif de mise en pression 33a et permet aux disques extérieur et intérieur de l'ensemble multidisques principal 27 de s'écarter sans pour autant comprimer encore l'ensemble multidisques auxiliaire 28. Cette position de la fourchette F2b correspond à une position neutre du dispositif d'embrayage 3 dans laquelle le moteur n'est relié ni à l'arbre primaire principal 4, ni à l'arbre primaire auxiliaire 22.

Lorsque la fourchette de commande d'embrayage F2b est déplacée encore vers la droite de la figure 1, l'ensemble multidisques principal 27 continue d'être à l'état libre et l'ensemble multidisques auxiliaire 28 est comprimé. Cette position constitue une position d'enclenchement auxiliaire du dispositif d'embrayage 3 dans laquelle le moteur est relié à l'arbre primaire auxiliaire 22.

On va maintenant décrire les pignons des autres arbres de la boîte de vitesses. L'arbre secondaire 7 comprend de gauche à droite sur la figure 1, un palier à billes 41, un pignon fixe de seconde 42, une bague entretoise 42a, un pignon fixe de quatrième et de sixième 43, une bague entretoise 43a, un pignon fixe 44 de troisième et de cinquième prenant appui axialement sur un épaulement 7a de l'arbre secondaire 7. L'arbre secondaire 7 comprend successivement, de gauche à droite à partir de l'épaulement 7a, un pignon fou de marche arrière 45, un corps de synchroniseur à crabot 46 monté sur des cannelures, un pignon fou de première 47 prenant appui axialement sur le pignon d'attaque 8. L'extrémité droite de l'arbre secondaire 7 est montée en rotation sur un palier à rouleaux 48.

La boîte de vitesses comprend également un arbre intermédiaire 12 monté à rotation sur deux paliers 49 et 50 situés à chacune de ses extrémités. L'extrémité située du côté du dispositif d'embrayage 3 est montée à rotation sur le palier à billes 50 fixé dans le carter d'embrayage 2. Un support rapporté 51 comprend une partie 52 fixée sur le carter principal 1 et une partie 53 faisant saillie radialement à l'intérieur du carter 1. La partie en saillie 53 reçoit le palier 49. La partie 52 est fixée sur le carter principal 1 par des moyens de fixation comprenant des vis 54.

Grâce à l'existence du support rapporté 51, on comprend que le synchroniseur 17 peut être aisément logé dans le carter principal 1, malgré le fait que l'encombrement radial maximal du synchroniseur 17 dépasse l'extrémité de l'arbre intermédiaire 12. Les pignons 45 et 47, et le synchroniseur 46 correspondant aux rapports de marche arrière et de première sont reportés sur l'axe secondaire 7, de manière à favoriser encore le rapprochement de l'arbre intermédiaire 12 et de l'arbre primaire principal 4.

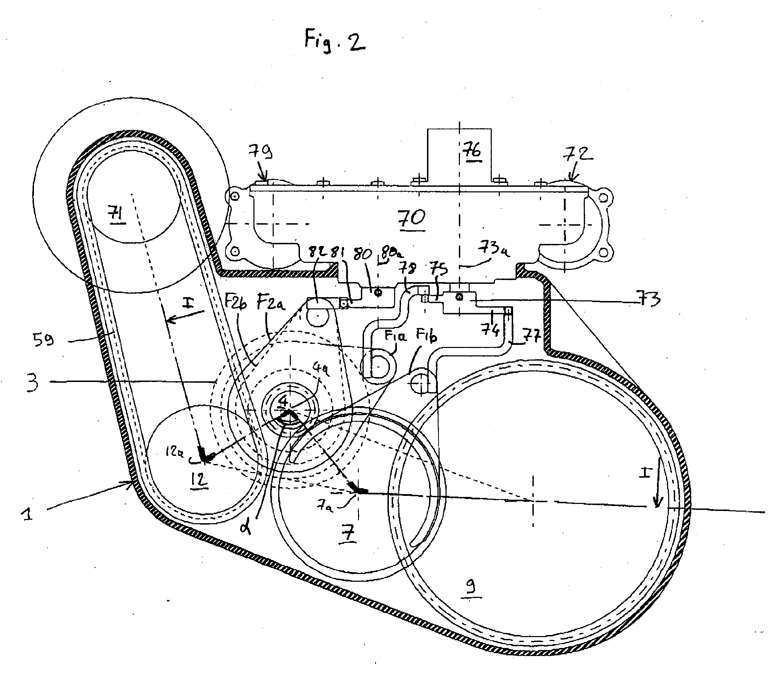

Grâce aux moyens de fixation du support rapporté 51 sur le carter principal 1, l'arbre intermédiaire 12 est immobilisé quelle que soit la direction des efforts radiaux s'exerçant sur lui. L'arbre intermédiaire 12 comprend successivement, de gauche à droite sur la figure 1, un pignon intermédiaire de marche arrière 55 monté libre sur l'arbre intermédiaire 12, une roue d'entraînement 56, un premier pignon de démultiplication 57 et un deuxième pignon de démultiplication 58. La roue d'entraînement 56 et les deux pignons de démultiplication 57 et 58 sont monoblocs avec l'arbre intermédiaire 12. La roue d'entraînement 56 coopère avec une chaîne 59 reliée à un rotor d'un moteur auxiliaire 71 du véhicule, visible en figure 2.

Le deuxième pignon de démultiplication 58 présente un nombre de dents inférieur au premier pignon de démultiplication 57. Lorsque le dispositif d'embrayage 3 est en position d'enclenchement principal, l'arbre principal 4 présente une vitesse de rotation identique au vilebrequin 5. Le pignon fou 18 peut entraîner le véhicule selon le rapport de troisième. Lorsque le dispositif d'embrayage 3 est en position d'enclenchement auxiliaire, l'arbre primaire auxiliaire 22 présente une vitesse de rotation identique au vilebrequin 5. L'arbre primaire principal 4 est entraîné avec une vitesse de rotation supérieure à celle du vilebrequin 5, et le pignon fou 18 peut entraîner le véhicule selon le rapport de cinquième.

Le synchroniseur simple 15 et le synchroniseur double 17 sont du type à cônes de friction, tels que décrits par exemple dans la demande de brevet français FR-A-2 821 652 à laquelle on pourra se référer.

Le pignon fou de première 47 est équipé d'une roue libre 47a, tel que décrit dans la demande de brevet EP 1 273 825 (RENAULT).

Le synchroniseur double à crabot 46 est commandé par une fourchette F1b. Le synchroniseur double à friction 17 est commandé par une fourchette F1a. Le synchroniseur simple à friction 15 est commandé par une fourchette F2a et le dispositif d'embrayage 3 est commandé par la fourchette F2b.

Le pignon fou de seconde 14 engrène avec le pignon fixe de seconde 42 et constitue, avec le synchroniseur simple 15, un module de seconde vitesse. Le pignon for 16 et le pignon fixe 43 constituent avec une partie du synchroniseur double 17 un module de quatrième et de sixième vitesses. Le pignon fou 18 et le pignon fixe 44 constituent, avec l'autre partie du synchroniseur double à friction 17, un module de troisième et de cinquième vitesses. La denture 19 engrène avec le pignon intermédiaire de marche arrière 55, lequel engrène également avec le pignon fou 45 de marche arrière. La denture 19, le pignon intermédiaire de marche arrière 55 et le pignon fou 45 de marche arrière constituent, avec une partie du synchroniseur double 46, un module de marche arrière. La denture 20 engrène avec le pignon fou de première vitesse 47 et constitue, avec l'autre partie du synchroniseur 46, un module de première vitesse. Les premiers pignons de démultiplication 21 et 57 engrènent ensemble ainsi que les deuxièmes pignons de démultiplication 25 et 58. L'ensemble des modules de la boîte de vitesses sont situés dans un ensemble mécanique délimité d'un côté par le carter principal 1 et de l'autre par la cloison 2a du carter d'embrayage 2. Les paliers à billes 13 et 41 sont fixés dans le carter principal 1. Le palier à rouleaux 48 ainsi que les paliers à billes 26 et 50 sont fixés dans la cloison 2a du carter d'embrayage 2.

La figure 2 montre un système de commande 70 du groupe motopropulseur ainsi que la couronne de différentiel 9, l'axe 4a des arbres primaires principal 4 et auxiliaire 22 et du dispositif d'embrayage 3, l'axe 12a de l'arbre intermédiaire 12, l'axe 7a de l'arbre secondaire 7. Le groupe motopropulseur comprend un moteur auxiliaire 71 relié à l'arbre intermédiaire 12 par la chaîne 59. Le moteur auxiliaire 71 est une machine électrique cumulant les fonctions de démarreur, d'alternateur, et de moteur d'entraînement.

Le système de commande 70 comprend un premier actionneur motorisé 72 apte à faire pivoter un premier bloc de sélection 73 autour d'un axe 73a transversal par rapport aux arbres de la boîte de vitesses. Le premier bloc de sélection 73 est muni d'un premier doigt de passage 74 et d'un deuxième doigt de passage 75. Le premier actionneur 72 est muni d'un dispositif de sélection 76 capable de déplacer en translation le premier bloc de sélection 73 entre une première position de sélection illustrée sur la figure 2 dans laquelle le premier doigt de passage 74 coopère avec une première tige d'entraînement de fourchette 77 et une deuxième position de sélection, non représentée sur la figure 2, dans laquelle le deuxième doigt de passage 75 coopère avec une deuxième tige d'entraînement de fourchette 78. La première tige d'entraînement de fourchette 77 entraîne la fourchette F1b pour actionner le synchroniseur à crabot 46. La deuxième tige d'entraînement de fourchette 78 entraîne la fourchette F1a pour actionner le synchroniseur double 17.

Le système de commande 70 comprend également un deuxième actionneur motorisé 79 capable de faire pivoter un deuxième bloc de sélection 80 autour d'un axe transversal 80a. Le deuxième bloc de sélection 80 est muni d'un doigt de passage 81 coopérant avec une tige d'entraînement de fourchette 82 reliée d'une part à la fourchette F2a d'entraînement du synchroniseur simple 15 et d'autre part, à la fourchette F2b d'actionnement du dispositif d'engrenage 3.

Le premier actionneur 72 entraîne alternativement les fourchettes F1a et F1b selon deux positions de sélection différentes. Le deuxième actionneur 79 entraîne alternativement les fourchettes F2a ou F2b.

On va maintenant décrire le fonctionnement de la boîte de vitesses. Le pignon fou de seconde 14 engrène avec le pignon fixe de seconde 42. Le pignon fou 16, de quatrième et de sixième, engrène avec le pignon fixe 43 correspondant. Le pignon fou 18, de troisième et de cinquième, engrène avec le pignon fixe 44 correspondant. La denture 19 de marche arrière engrène avec le pignon intermédiaire de marche arrière 55, lequel engrène également avec le pignon fou de marche arrière 45. La denture 20 de première vitesse engrène avec le pignon fou 47 correspondant.

L'enclenchement d'un rapport de première vitesse ou de marche arrière nécessite tout d'abord d'actionner la fourchette d'embrayage F2b de façon à amener le dispositif d'embrayage 3 dans une configuration neutre. L'opération nécessite ensuite d'actionner la fourchette F1b vers le pignon fou correspondant 16 ou 18, puis de ramener la fourchette F2b en position d'enclenchement principal dans laquelle l'ensemble multidisques principal 27 est serré.

La transition entre le rapport de première et le rapport de seconde se fait en enclenchant directement le synchroniseur simple 15 en déplaçant la fourchette F2a vers le pignon de seconde 14, c'est-à-dire vers la gauche de la figure 1. Cet enclenchement a lieu alors que la fourchette F1b reste en position de première enclenchée. La vitesse de rotation de l'arbre secondaire 7 est imposée par le synchroniseur de seconde 15. La roue libre 47a permet au pignon fou de première 47 d'avoir une vitesse de rotation inférieure à celle de l'arbre secondaire 7. La transition entre les rapports de première et de seconde a lieu sous couple.

Lorsque le rapport de seconde est enclenché et que la vitesse du véhicule augmente, la transition de rapport à préparer n'est plus la transition de seconde vers le rapport de première et devient la transition du rapport de seconde vers un rapport de troisième ou de quatrième. Un calculateur, non représenté, commande au premier actionneur 72 de ramener la fourchette F1b en position neutre, puis de changer de position de sélection de manière à être prêt à actionner la fourchette F1a.

La transition entre le rapport de seconde et le rapport de troisième ou de quatrième se fait en enclenchant directement la fourchette F1a vers le pignon correspondant 16 ou 18, simultanément avec le retour de la fourchette F2a à une position neutre. La coïncidence du mouvement d'enclenchement de la fourchette F1a avec le mouvement de déclenchement du rapport de seconde par la fourchette F2a permet de réaliser une transition sous couple sans agir sur le dispositif d'embrayage 3.

La transition entre le rapport de troisième et le rapport de quatrième se fait avec une interruption du couple de courte durée. Le premier actionneur 72 déplace la fourchette F1b vers la gauche de la figure 1 et le synchroniseur double 17 passe d'une configuration de troisième enclenchée à une configuration neutre et immédiatement après à une configuration de quatrième enclenchée.

La transition du rapport de troisième au rapport de cinquième se fait en laissant la fourchette F1a enclenchée avec le pignon 18 et en déplaçant la fourchette F2b vers la droite de la figure 1. Le dispositif d'embrayage 3 passe d'une position d'enclenchement principal à une position d'enclenchement auxiliaire en passant, de manière transitoire, par une position neutre. La transition de troisième en cinquième est également une transition avec une interruption de couple de courte durée.

Il en est de même pour la transition entre les rapports de quatrième et de sixième vitesses. Les pignons de démultiplication 57 et 58 permettent de dédoubler les rapports établis par le synchroniseur double 17 en agissant uniquement sur le dispositif d'embrayage 3.

La transition entre le rapport de quatrième et le rapport de cinquième se fait en faisant coïncider le déplacement de la fourchette F1a par le premier actionneur 72 depuis le pignon 16 jusqu'au pignon 18 en passant par une position neutre et le déplacement de la fourchette F2b par le deuxième actionneur 79. La simultanéité des deux phases de transition du dispositif d'embrayage 3 et du synchroniseur double 17 permet d'obtenir une transition de quatrième à cinquième vitesse avec un temps d'interruption du couple également de courte durée.

La transition entre les rapports de cinquième et de sixième vitesse se fait en déplaçant uniquement la fourchette F1a et a lieu avec une interruption du couple de courte durée.

Dans la boîte de vitesses, les transitions entre deux rapports quelconque de marche avant ont lieu, soit sous couple pour ce qui est des rapports inférieur ou égal à la troisième, soit avec une interruption de couple de courte durée. La différence entre deux rapports de transmission supérieur ou égal à la troisième est plus faible que la différence entre deux rapports inférieur ou égal à la troisième. Les temps de transition entre deux rapports de courte durée sont quasiment insensibles au conducteur dont le véhicule se comporte quasiment comme s'il est équipé d'une boîte de vitesses à transition sous couple pour l'ensemble de ces rapports. La durée de l'interruption de couple lors d'une transition de rapport est de quelques centaines de milliseconde, voire inférieure à 100 millisecondes.

On va maintenant décrire le comportement de la boîte de vitesses reliée d'une part à un moteur thermique par le vilebrequin 5 et d'autre part au moteur auxiliaire 71 par la chaîne 59. Lorsque le moteur thermique et le véhicule sont à l'arrêt, la phase de démarrage se fait en positionnant la fourchette F2b en position d'enclenchement auxiliaire, les autres fourchettes de la boîte de vitesses étant en position neutre. Dans cette configuration, l'arbre secondaire 7 n'est entraîné par aucun pignon et le couple moteur transite moteur auxiliaire 71 agissant comme démarreur, au deuxième pignon de démultiplication 58, à l'arbre primaire auxiliaire 22, puis au moteur thermique et permet à celui-ci de démarrer.

Inversement, lorsque le véhicule est à l'arrêt, que le moteur thermique tourne, le couple moteur est transmis soit par l'arbre primaire auxiliaire 22, soit par l'arbre primaire principal 4 vers le moteur auxiliaire 71 agissant en tant qu'alternateur qui peut alors recharger les batteries du véhicule. Lorsqu'un rapport de première ou de seconde est enclenché, le moteur thermique et le moteur auxiliaire 71 contribuent à fournir l'énergie mécanique à l'arbre primaire principal 4.

Dans un fonctionnement du véhicule en milieu urbain, le moteur thermique peut être arrêté et le moteur auxiliaire 71 entraîne seul l'arbre primaire principal 4 par les premiers pignons de démultiplication 21 et 57. Le passage des rapports de marche arrière ou celui des quatre premiers rapports de vitesse, ont lieu comme précédemment décrit.

Dans un fonctionnement du véhicule sur route, le moteur auxiliaire 71 et le moteur thermique contribuent conjointement à l'entraînement du véhicule. Lorsque le moteur thermique est sollicité à un régime pour lequel son rendement énergétique est médiocre, le moteur auxiliaire 71 fournit de l'énergie mécanique. Inversement, lorsque le véhicule est en descente, un calculateur peut configurer le moteur auxiliaire 71 pour que l'essentiel du frein moteur soit réalisé par le moteur auxiliaire 71 et l'énergie mécanique du véhicule est transformée en énergie électrique.

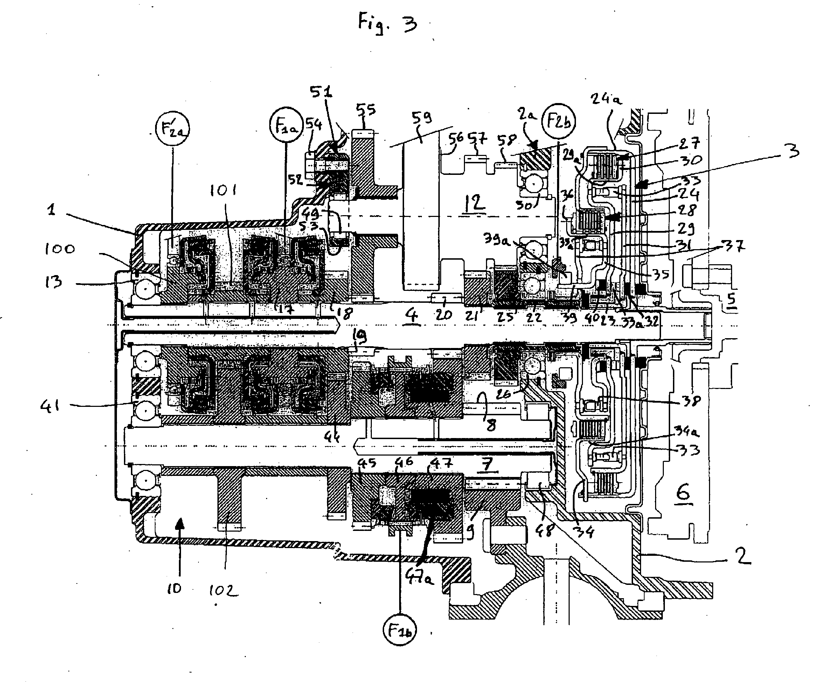

La figure 3 illustre un autre mode de réalisation de l'invention sous la forme d'une boîte de vitesses hybride à cinq rapports de marche avant. On retrouve dans ce mode de réalisation l'ensemble des caractéristiques structurelles précédemment décrites en relation aux figures 1 et 2 hormis les caractéristiques liées au module des rapports de deuxième, de quatrième et de sixième ainsi que le mode d'actionnement de ces modules. Les pièces identiques ou similaires portent les mêmes références que sur les figures 1 et 2.

On va maintenant décrire uniquement les parties différentes correspondant à la partie gauche de la figure 3. L'arbre primaire principal 4 comprend, de gauche à droite, le palier 13, un synchroniseur simple à cônes de friction 100 et un pignon fou de seconde quatrième vitesses 101 coopérant sur sa gauche avec un baladeur du synchroniseur simple 100 et sur sa droite avec un baladeur du synchroniseur double 17. Le synchroniseur simple 100 est actionné par une fourchette F'2a entraînée par le deuxième actionneur 79 (figure 2). L'arbre secondaire 7 est muni de gauche à droite sur la figure du palier à billes 41, puis d'une entretoise, d'un pignon 102, monté sur des cannelures de l'arbre secondaire 7. Le reste de la boîte de vitesses, illustré sur la figure 3, est identique au mode de réalisation précédemment décrit en référence aux figures 1 et 2.

Le pignon 101 engrène avec le pignon fou 101. Le deuxième actionneur 79 est muni d'un bloc de sélection à deux doigts de passage opposés contribuant à pousser deux tiges d'entraînement de fourchette se déplaçant sur un même axe parallèle aux arbres de la boîte de vitesses. Lorsque le bloc de sélection du deuxième actionneur 79 tourne dans un sens de rotation, l'un des doigts de passage entraîne une tige d'entraînement de fourchette qui pousse la fourchette F2b vers la droite de la figure 3. Lorsque le même bloc de sélection tourne dans l'autre sens, l'autre doigt de passage tire une autre tige d'entraînement qui tire la fourchette F'2a également vers la droite de la figure 3.

On va maintenant décrire les parties du fonctionnement de cette boîte de vitesses qui diffèrent du fonctionnement de la boîte de vitesses précédemment décrite. La transition entre le rapport de première et le rapport de seconde, se fait sous couple en actionnant la fourchette F'2a vers la droite de la figure 3 tandis que la fourchette F1b reste enclenchée. Lorsque le régime moteur est tel qu'il y a lieu de configurer la boîte de vitesses dans une position la préparant à une transition de seconde vers troisième, la fourchette F1b est ramenée en position neutre et le premier actionneur 72 change de position de sélection de manière à être prêt à déplacer la fourchette F1a vers la droite de la figure 3.

Lors de la transition entre le rapport de seconde et le rapport de troisième ou de quatrième, le deuxième actionneur 79 ramène la fourchette F'2a en position neutre de manière simultanée avec l'enclenchement de la fourchette F1a soit vers le pignon fou 18 du rapport de troisième, soit vers la gauche de la figure 3 pour synchroniser le pignon fou 101. La simultanéité de ces deux changements permet de réaliser une transition sous couple du rapport de seconde vers le rapport de troisième ou de quatrième. La transition du rapport de troisième au rapport de quatrième présente une interruption de couple de courte durée. Il en est de même de la transition du rapport de troisième au rapport de cinquième.

Comme dans le mode de réalisation précédent, la transition entre le rapport de quatrième au rapport de cinquième consiste à synchroniser le déplacement de la fourchette F1a et de la fourchette F2b de manière que l'instant d'interruption de couple due au synchroniseur double à friction et au dispositif d'embrayage 3 coïncident. Dans ce mode de réalisation, le même pignon fou 101 peut être synchronisé à l'arbre primaire principal 4 soit par l'action du premier actionneur 72, soit par l'action du deuxième actionneur 79.

## Revendications

1. Groupe motopropulseur pour véhicule automobile, équipé d'un moteur principal, d'un moteur auxiliaire (71) et d'une boîte de vitesses à arbres parallèles, laquelle boîte de vitesses comprend au moins un arbre primaire (4) relié au moteur principal par un dispositif d'embrayage (3), au moins un arbre secondaire (7) muni d'un pignon d'attaque (8) engrenant avec une couronne de différentiel (9), un arbre intermédiaire (12) non coaxial avec les arbres primaire (4, 22) et secondaire (7), et une pluralité de synchroniseurs (15, 17, 46) aptes à solidariser de manière sélective en rotation un arbre primaire (4) avec un arbre secondaire (7), comprenant un arbre primaire principal (4) et un arbre primaire auxiliaire (22) reliés chacun de manière sélective au moteur principal par le dispositif d'embrayage (3) ; l'arbre intermédiaire (12) étant muni d'une roue d'entraînement (56), reliée au moteur auxiliaire (71), et liée en rotation de manière permanente avec les arbres primaires (4, 22), **caractérisé en ce que** la roue d'entraînement (56) est montée fixe sur l'arbre intermédiaire (12), lequel l'arbre intermédiaire (12) est muni d'un couple de pignons fixes de démultiplication (57-58), engrenant l'un (57) avec un pignon fixe (21) de l'arbre primaire principal (4), l'autre (58) avec un pignon fixe (25) de l'arbre primaire auxiliaire (22).

2. Groupe motopropulseur selon la revendication 1, comprenant une boîte de vitesses robotisée munie d'au moins un actionneur motorisé (72, 79) de commande de synchroniseurs (15, 17, 46) et/ou du dispositif d'embrayage (3).

3. Groupe motopropulseur selon la revendication 1 ou 2, dans lequel le dispositif d'embrayage (3) présente une position enclenchée principale où l'arbre primaire principal (4) est synchronisé avec le moteur principal, une position neutre où aucun arbre primaire n'est relié au moteur principal, et une position enclenchée auxiliaire où l'arbre primaire auxiliaire (22) est synchronisé avec le moteur principal.

4. Groupe motopropulseur selon l'une quelconques des revendications précédentes, dans lequel l'arbre intermédiaire (12) est muni d'un pignon intermédiaire de marche arrière (55), engrenant avec un pignon de marche arrière (45) monté sur l'arbre secondaire (7), un synchroniseur de marche arrière (46) étant monté soit sur l'arbre intermédiaire (12), soit sur l'arbre secondaire (7).

5. Groupe motopropulseur selon la revendication 4, dans lequel la vitesse de rotation de la roue d'entraînement (56) est supérieure à la vitesse de rotation du pignon intermédiaire de marche arrière (55).

6. Groupe motopropulseur selon l'une quelconques des revendications précédentes, comprenant des moyens de fixation du moteur auxiliaire (71) et dans lequel la roue d'entraînement (56) et un rotor du moteur auxiliaire (71) sont reliés par une chaîne (59).

7. Groupe motopropulseur selon l'une quelconques des revendications précédentes, dans lequel la vitesse de rotation d'un rotor du moteur auxiliaire est supérieure à la vitesse de rotation du (4) ou des (4, 22) arbres primaires.

8. Groupe motopropulseur selon l'une quelconque des revendications précédentes, dans lequel le moteur principal est un moteur thermique et le moteur auxiliaire (71) est un générateur apte à transformer de l'énergie mécanique en une autre énergie, notamment électrique.

9. Groupe motopropulseur selon l'une quelconques des revendications précédentes, comprenant un synchroniseur double à crabot (46), monté sur l'arbre secondaire (7), contribuant aux rapports de marche arrière et au rapport de première vitesse, une roue libre (47a) étant intercalée entre un baladeur dudit synchroniseur (46) et un pignon fou de première (47), le pignon de première (47) étant le pignon de l'arbre secondaire (7) situé le plus proche du pignon d'attaque (8).

10. Groupe motopropulseur selon l'une quelconques des revendications précédentes, comprenant un synchroniseur double (17) et un synchroniseur simple (15, 100) du type à cônes de friction montés sur l'un (4) des arbres primaires, ledit synchroniseur double (17) à friction contribuant à au moins trois rapports de marche avant.

11. Groupe motopropulseur selon les revendications 9 et 10 prisent dans leur ensemble, présentant cinq rapports de marche avant, dans lequel le synchroniseur double (17) à friction et le synchroniseur double (46) à crabot sont actionnés par un premier actionneur motorisé (72) selon deux positions de sélection différentes, dans lequel le synchroniseur simple (100) à friction solidarise un pignon de seconde (101) situé du même coté dudit synchroniseur simple (100) que le dispositif d'embrayage (3), ledit synchroniseur simple (100) et le dispositif d'embrayage (3) étant actionnés par un deuxième actionneur motorisé (79).

12. Groupe motopropulseur selon les revendications 9 et 10 prises dans leur ensemble, présentant six rapports de marche avant, dans lequel le synchroniseur double à friction (17) et le synchroniseur double à crabot (46) sont actionnés par un premier actionneur motorisé (72) selon deux positions de sélection différentes, dans lequel le synchroniseur simple (15) à friction solidarise un pignon de seconde (14) situé du côté opposé dudit synchroniseur simple (15) par rapport au dispositif d'embrayage (3), ledit synchroniseur simple (15) et le dispositif d'embrayage (3) étant actionnés par un deuxième actionneur motorisé (79) selon une même position de sélection.

## Claims

1. A drivetrain for a motor vehicle, equipped with a main engine, with an auxiliary engine (71) and with a parallel shaft transmission, which transmission comprises at least one primary shaft (4) connected to the main engine by a clutch device (3), at least one secondary shaft (7) equipped with a drive pinion (8) meshing with a differential ring gear (9), an intermediate shaft (12) that is not coaxial with the primary (4, 22) and secondary (7) shafts, and a plurality of synchromeshes (15, 17, 46) capable selectively of causing a primary shaft (4) to rotate as one with a secondary shaft (7), the drivetrain comprising a main primary shaft (4) and an auxiliary primary shaft (22) each selectively connected to the main engine by the clutch device (3); the intermediate shaft (12) being equipped with a drive wheel (56) connected to the auxiliary engine (71) and permanently connected in terms of rotation to the primary shafts (4, 22), **characterized in that** the drive wheel (56) is fixedly mounted on the intermediate shaft (12), which intermediate shaft (12) is equipped with a pair of fixed step-down pinions (57-58), one of them (57) meshing with a fixed pinion (21) belonging to the main primary shaft (4), and the other (58) meshing with a fixed pinion (25) belonging to the auxiliary primary shaft (22).

2. Drivetrain according to Claim 1, comprising a computer-controlled transmission equipped with at least one motorized actuator (72, 79) for controlling the synchromeshes (15, 17, 46) and/or the clutch device (3).

3. Drivetrain according to Claim 1 or 2, in which the clutch device (3) has a main engaged position in which the main primary shaft (4) is synchronized with the main engine, a neutral position in which no primary shaft is connected to the main engine, and an auxiliary engaged position in which the auxiliary primary shaft (22) is synchronized with the main engine.

4. Drivetrain according to any one of the preceding claims, in which the intermediate shaft (12) is equipped with an intermediate reverse-gear pinion (55) in mesh with a reverse-gear pinion (45) mounted on the secondary shaft (7), a reverse-gear synchromesh (46) being mounted either on the intermediate shaft (12) or on the secondary shaft (7).

5. Drivetrain according to Claim 4, in which the rotational speed of the drive wheel (56) is greater than the rotational speed of the intermediate reverse-gear pinion (55).

6. Drivetrain according to any one of the preceding claims, comprising means of attachment of the auxiliary engine (71), and in which the drive wheel (56) and a rotor belonging to the auxiliary engine (71) are connected by a chain (59).

7. Drivetrain according to any one of the preceding claims, in which the rotational speed of a rotor of the auxiliary engine is greater than the rotational speed of the primary shaft (4) or shafts (4, 22).

8. Drivetrain according to any one of the preceding claims, in which the main engine is a combustion engine and the auxiliary engine (71) is a generator capable of converting mechanical energy into some other form of energy, particularly electrical energy.

9. Drivetrain according to any one of the preceding claims, comprising a double dog-clutch synchromesh (46) mounted on the secondary shaft (7), contributing to the reverse-gear ratios and to the first-gear ratio, a freewheel (47a) being interposed between a sliding gear of said synchromesh (46) and a first-gear idler pinion (47), the first-gear pinion (47) being the closest pinion on the secondary shaft (7) to the drive pinion (8).

10. Drivetrain according to any one of the preceding claims, comprising a double synchromesh (17) and a single synchromesh (15, 100) of the friction cone type mounted on one (4) of the primary shafts, said double friction-type synchromesh (17) contributing to at least three forward-gear ratios.

11. Drivetrain according to Claims 9 and 10 considered together, having five forward-gear ratios, in which the double friction-type synchromesh (17) and the double dog-clutch synchromesh (46) are actuated by a first motorized actuator (72) with two different selection positions, in which the single friction-type synchromesh (100) engages a second-gear pinion (101) situated on the same side of said single synchromesh (100) as the clutch device (3), said single synchromesh (100) and the clutch device (3) being actuated by a second motorized actuator (79).

12. Drivetrain according to Claims 9 and 10 considered together, having six forward-gear ratios, in which the double friction-type synchromesh (17) and the double dog-clutch synchromesh (46) are actuated by a first motorized actuator (72) with two different selection positions, in which the single friction-type synchromesh (15) engages a second-gear pinion (14) situated on the opposite side of said single synchromesh (15) with respect to the clutch device (3), said single synchromesh (15) and the clutch device (3) being actuated by a second motorized actuator (79) with one and the same selection position.

## Patentansprüche

1. Antriebseinheit für ein Kraftfahrzeug, ausgestattet mit einem Hauptmotor, mit einem Hilfsmotor (71) und mit einem Schaltgetriebe mit parallelen Wellen, wobei das Schaltgetriebe mindestens eine Primärwelle (4), die mit dem Hauptmotor über eine Kupplungsvorrichtung (3) verbunden ist, mindestens eine Sekundärwelle (7), die mit einem Antriebsritzel (8) versehen ist, das in ein Differentialrad (9) eingreift, eine Zwischenwelle (12), die mit der Primärwelle (4, 22) und der Sekundärwelle (7) nicht koaxial ist, und mehrere Synchronisiervorrichtungen (15, 17, 46) enthält, die eine Primärwelle (4) mit einer Sekundärwelle (7) selektiv in Drehung fest verbinden können, wobei die Antriebseinheit eine Haupt-Primärwelle (4) und eine Sekundär-Primärwelle (22) enthält, die je über die Kupplungsvorrichtung (3) selektiv mit dem Hauptmotor verbunden sind; wobei die Zwischenwelle (12) mit einem Antriebsrad (56) versehen ist, das mit dem Hilfsmotor (71) verbunden ist, und in Drehung permanent mit den Primärwellen (4, 22) verbunden ist, **dadurch gekennzeichnet, dass** das Antriebsrad (56) ortsfest auf die Zwischenwelle (12) montiert ist, wobei die Zwischenwelle (12) mit einem Paar von ortsfesten Untersetzungsritzeln (57-58) versehen ist, von denen eines (57) in ein ortsfestes Ritzel (21) der Haupt-Primärwelle (4) eingreift, das andere (58) in ein ortsfestes Ritzel (25) der Hilfs-Primärwelle (22) eingreift.

2. Antriebseinheit nach Anspruch 1, die ein robotisiertes Schaltgetriebe enthält, das mit mindestens einem motorisierten Stellantrieb (72, 79) zur Steuerung von Synchronisiervorrichtungen (15, 17, 46) und/oder der Kupplungsvorrichtung (3) versehen ist.

3. Antriebseinheit nach Anspruch 1 oder 2, bei der die Kupplungsvorrichtung (3) eine Haupteinrückstellung, in der die Haupt-Primärwelle (4) mit dem Hauptmotor synchronisiert ist, eine Leerlaufstellung, in der keine Primärwelle mit dem Hauptmotor verbunden ist, und eine Hilfseinrückstellung aufweist, in der die Hilfs-Primärwelle (22) mit dem Hauptmotor synchronisiert ist.

4. Antriebseinheit nach einem der vorhergehenden Ansprüche, bei der die Zwischenwelle (12) mit einem Rückwärtsgang-Zwischenritzel (55) versehen ist, das in ein Rückwärtsgangritzel (45) eingreift, das auf die Sekundärwelle (7) montiert ist, wobei eine Rückwärtsgang-Synchronisiervorrichtung (46) entweder auf die Zwischenwelle (12) oder auf die Sekundärwelle (7) montiert ist.

5. Antriebseinheit nach Anspruch 4, bei der die Drehgeschwindigkeit des Antriebsrads (56) höher als die Drehgeschwindigkeit des Rückwärtsgang-Zwischenritzels (55) ist.

6. Antriebseinheit nach einem der vorhergehenden Ansprüche, die Einrichtungen zur Befestigung des Hilfsmotors (71) enthält und bei der das Antriebsrad (56) und ein Rotor des Hilfsmotors (71) durch eine Kette (59) verbunden sind.

7. Antriebseinheit nach einem der vorhergehenden Ansprüche, bei der die Drehgeschwindigkeit eines Rotors des Hilfsmotors höher als die Drehgeschwindigkeit des (4) oder der (4, 22) Primärwellen ist.

8. Antriebseinheit nach einem der vorhergehenden Ansprüche, bei der der Hauptmotor ein Verbrennungsmotor und der Hilfsmotor (71) ein Generator ist, der mechanische Energie in eine andere, insbesondere elektrische, Energie umwandeln kann.

9. Antriebseinheit nach einem der vorhergehenden Ansprüche, die eine doppelte Klauen-Synchronisiervorrichtung (46) enthält, die auf die Sekundärwelle (7) montiert ist, die zu den Rückwärtsgängen und zum ersten Gang beiträgt, wobei ein Freilaufrad (47a) zwischen ein Schieberad der Synchronisiervorrichtung (46) und ein Freilaufritzel des ersten Gangs (47) eingefügt ist, wobei das Ritzel für den ersten Gang (47) das Ritzel der Sekundärwelle (7) ist, das sich dem Antriebsritzel (8) am nächsten befindet.

10. Antriebseinheit nach einem der vorhergehenden Ansprüche, die eine doppelte Synchronisiervorrichtung (17) und eine einfache Synchronisiervorrichtung (15, 100) von der Art mit Reibungskegeln enthält, die auf eine (4) der Primärwellen montiert sind, wobei die doppelte Reibungs-Synchronisiervorrichtung (17) zu mindestens drei Vorwärtsgängen beiträgt.

11. Antriebseinheit nach den Ansprüchen 9 und 10, zusammen gesehen, die fünf Vorwärtsgänge aufweist, bei der die doppelte Reibungs-Synchronisiervorrichtung (17) und die doppelte Klauen-Synchronisiervorrichtung (46) von einem ersten motorisierten Stellantrieb (72) gemäß zwei unterschiedlichen Wahlstellungen betätigt werden, bei der die einfache Reibungs-Synchronisiervorrichtung (100) ein Ritzel des zweiten Gangs (101) fest verbindet, das sich auf der gleichen Seite der einfachen Synchronisiervorrichtung (100) befindet wie die Kupplungsvorrichtung (3), wobei die einfache Synchronisiervorrichtung (100) und die Kupplungsvorrichtung (3) von einem zweiten motorisierten Stellantrieb (79) betätigt werden.

12. Antriebseinheit nach den Ansprüchen 9 und 10, zusammen gesehen, die sechs Vorwärtsgänge aufweist, bei der die doppelte Reibungs-Synchronisiervorrichtung (17) und die doppelte Klauen-Synchronisiervorrichtung (46) von einem ersten motorisierten Stellantrieb (72) gemäß zwei unterschiedlichen Wahlstellungen betätigt werden, bei der die einfache Reibungs-Synchronisiervorrichtung (15) ein Ritzel des zweiten Gangs (14) fest verbindet, das sich auf der entgegengesetzten Seite der einfachen Synchronisiervorrichtung (15) bezüglich der Kupplungsvorrichtung (3) befindet, wobei die einfache Synchronisiervorrichtung (15) und die Kupplungsvorrichtung (3) von einem zweiten motorisierten Stellantrieb (79) gemäß der gleichen Auswahlstellung betätigt werden.
